## Europäisches Patentamt

## European Patent Office

## Office européen des brevets

(19)

(11) Veröffentlichungsnummer: **0 123 363**
**B1**

(12)

# EUROPÄISCHE PATENTSCHRIFT

(45) Veröffentlichungstag der Patentschrift:
**20.07.88**

(21) Anmeldenummer: **84200577.9**

(22) Anmeldetag: **19.04.84**

(51) Int. Cl.⁴: **F 16 L 3/10, E 04 D 13/08**

(54) **Rohrschelle.**

(30) Priorität: **21.04.83 NL 8301406**

(43) Veröffentlichungstag der Anmeldung:
**31.10.84 Patentblatt 84/44**

(45) Bekanntmachung des Hinweises auf die Patenterteilung:
**20.07.88 Patentblatt 88/29**

(84) Benannte Vertragsstaaten:
**AT BE CH DE FR GB IT LI NL SE**

(56) Entgegenhaltungen:
**FR-A-1 601 690**
**GB-A-863 044**
**US-A-3 107 076**
**US-A-3 167 286**

(73) Patentinhaber: **J. van Walraven B.V., Industrieweg 5, NL- 3641 RK Mijdrecht (NL)**

(72) Erfinder: **Van Walraven, Jan, Prins Bernhardlaan 6, NL- 3641 GP Mijdrecht (NL)**

(74) Vertreter: **Boelsma, Gerben Harm, Ir., Octrooibureau Polak & Charlouis Laan Copes van Cattenburch 80, NL- 2585 GD Den Haag (NL)**

EP 0 123 363 B1

LIBER, STOCKHOLM 1988

## Beschreibung

Die Erfindung bezieht sich auf eine Rohrschelle, bestehend aus zwei mit miteinander verbindbaren Befestigungsflanschen bezw. Gegenflanschen an beiden Enden versehen, im wesentlichen halbringförmigen Schalen, wobei wenigstens einer der Befestigungsflansche einen in einer Seitenwand mündenden Einschnitt zur Aufname des Schaftes eines in den betreffenden Gegenflansch einzuschraubenden Befestigungsbolzens aufweist.

Solche Rohrschellen sind allgemein bekannt und werden z. B. zum Befestigen von zur Ableitung Himmelwassers dienenden Kunststofrohren an Gebäudewände angewandt. Üblicherweise jedoch wird dabei eine mittels eines zentralen Bolzens an die Wand zu befestigende Auflageschale benutzt, welche das zu befestigende Rohr zusammen mit der zweiten Schale völlig umschliesst. Bei der Befestigung des Rohrs wird zunächst die benötigte Anzahl von Auflageschalen an die Wand angeordnet. Die Anwendung in einen Flanschseitenrand mündender Einschnitte bei der Befestigungsschale bietet dabei die Möglichkeit zunächst die Befestigungsbolzen in die Gegenflansche der Auflageschale anzuordnen bevor das Rohr und die Befestigungsschale angeordnet werden. Zumal bei langen Rohren und einer entsprechend grossen Anzahl von Befestigungspunkten ist dies ein grosser Vorteil. Der Nachteil ist jedoch, dass die Befestigungsschale, nachdem sie mit ihren Flanschen unterhalb der Köpfe der vorläufig angeordneten Befestigungsbolzen eingeschoben ist, beim Andrehen der Bolzen die Neigung hat in der Einschnittlängsrichtung gegenüber den Befestigungsbolzen zu verschieben. Die Schale muss also während des Festdrehens der Bolzen gestützt werden, was umständlich ist.

Die Erfindung bezweckt nunmehr die Begegnung dieses Nachteils. Erfindungsgemäss wird dieses Ziel dadurch erreicht, dass der Flansch in der Nähe des offenen Endes des Einschnitts eine nach aussen zu der dem Bolzenkopf zugewendeten Seite der Ebene der Flanschfläche abweichende Erhöhung aufweist, welche beim Anliegen des Bolzenkopfes an den Flansch seitlich hinter den Bolzenkopf greift, sodass die Schelle gegen Verschiebung gesichert ist.

Der Vorteil solcher Erhöhungen wird deutlich sein. Die Befestigungsbolzen werden zunächst soweit in die Gegenflansche hineingeschraubt, dass der Abstand zwischen der Anliegefläche für den Bolzenkopf und dem betreffende Gegenflansch gerade genügt um beim Anordnen der Befestigungsschale den betreffenden Flansch mit seiner Erhöhung unterhalb der Bolzenauflagefläche hinwegschieben zu können. Sobald der Flansch dabei seine Lage gegenüber dem Gegenflansch erreicht hat, wird die Erhöhung beim "Zurückfedern" der angeordneten Schale seitlich hinter den Bolzenkopf greifen, sodass die Befestigungsschale und der Befestigungsbolzen gegen gegenseitige Verschiebung gesichert sind und der Befestigungsbolzen danach ohne weiteres angedreht werden kann.

Wenn die Rohrschelle, wie üblich, aus Blech hergestellt wird, ist die Erhöhung einfach dadurch zu realisieren, dass das Flanschmaterial an den betreffenden Flanschseitenwand entlang bezw. an wenigstens einer der Längsränder des Einschnitts entlang in einer von dem Gegenflansch abgekehrten Richtung abgewinkelt bezw. durchgesetzt wird.

Die Erfindung wird unten an Hand der Zeichnung eines Ausführungsbeispiels näher erläutert.

Fig. 1 zeigt eine Perspektivansicht der Rohrschelle gemäss der Erfindung und

Fig. 2 a-c zeigen bezw. in Obenansicht, Endansicht und Seitenansicht eine Variante der in Fig. 1 gezeigten Befestigungsflanschausführung.

Die in der Zeichnung dargestellte Rohrschelle besteht aus zwei im wesentlichen halbkreisförmigen Schalen 1 und 3. Die Schale 1 bildet eine Auflage für das nicht näher dargestellte Rohr und ist mittels eines zentralen Bolzens 2 in bekannter Weise an einer Wand befestigt. Das Halten des Rohrs in der Auflageschale 1 findet mittels der Schale 3 statt. Schale 3 hat Befestigungsflansche 5 an beiden Enden, während die Auflageschale entsprechende Gegenflänsche 4 aufweist. Die Gegenflansche der Auflageschale weisen Gewindelöcher 6 zur Aufnahme der mit 7 angegebenen Befestigungsbolzen auf, während die Befestigungsflansche 5 der Schale Löcher 8 aufweisen, welche in Form offener Einschnitte in die Flanschseitenwände 5a münden.

Wie insbesondere beim linken Flansch 5 ersichtlich ist, sind die Längsränder 8a des betreffenden Einschnitts 8 in einer von der Auflageschale 1 abgekehrten Richtung abgewinkelt. Dadurch ist der Flansch 5 an der Bolzenkopf-Auflageseite örtlich und zwar in der Nähe des offenen Endes des Einschnitts 8, erhöht. Die Funktion dieser Erhöhung wird unten näher erläutert.

Beim am meisten links liegenden Gegenflansch 4 der Auflageschale 1 ist der Befestigungsbolzen 7 in das betreffende Gewindeloch geschraubt und zwar so weit, dass der Abstand zwischen der Unterseite des Bolzenkopfes und der gegenüberliegenden Auflagefläche des Flansches 4, ein wenig grösser als die Dicke des Flansches 5 der Schale 3 an der Stelle der obengenannten Erhöhung ist. In dieser Situation kann nunmehr die Schale 3 in einfachster Weise in ihre wirksame Lage gegenüber der Auflageschale 1 gebracht werden, und zwar dadurch, dass sie in Richtung des Pfeils I bewegt wird. Bei dieser Bewegung tritt der Schaft des Befestigungsbolzens 7 in den Einschnitt 8 ein, während die durchgesetzten Ränder 8a dabei unterhalb der Unterfläche des Bolzenkopfes passieren können. Nachdem der Bolzenschaft dabei vom Endrand des Einschnitts 8 angehalten worden ist, wird der Flansch 5, angenommen dass sich ein Rohr in der Schale 1 befindet, die Neigung haben ein wenig vom Flansch 4 der Schale 1 zurückzufedern. Dabei greifen die vom Flanschseitenrand 5a abgekehrten Ende der durchgesetzten Einschnittsränder 8a hinter den Bolzenkopf 7a, wie bei den am meisten rechts liegenden Flanschen 4 und 5 angegeben ist.

Es wird deutlich sein, dass der Befestigungsbolzen darauf ohne weiteres angedreht werden kann, ohne dass es dabei nötig ist die Schale 3 in Richtung des Pfeils I zu unterstützen. Nicht nur bieten die erhöhten Einschnittsräder 8a ein Vorteil bei der Anordnung und Befestigung der Schale 3, sondern sie bilden zugleicherzeit eine zweckmässige Sicherung gegen unerwünschtes Lösen der Schale 3 in jenen Fällen, wo die Befestigungsbolzen 7 nicht genügend fest angedreht wären.

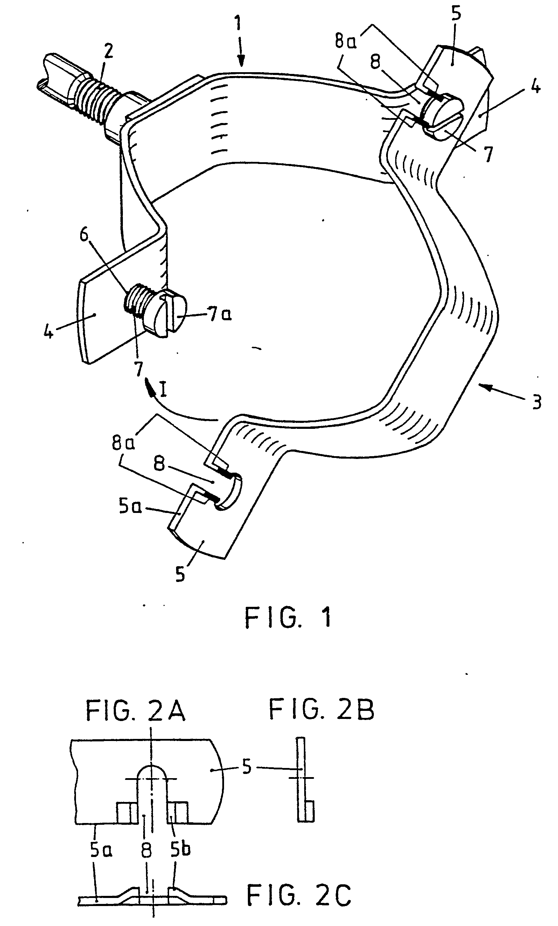

In der in Fig. 2 a-c dargestellten Ausfürungsvariante ist die bezweckte örtliche Flanschverdickung in der Nähe des offenen Endes des Einschnitts 8 dadurch erhalten, dass der Flansch 5 am Flanschseitenrand 5a entlang mit Durchsetzungen 5b versehen ist. Es leuchtet jedoch ein, dass weitere Varianten möglich sind, zum Beispiel durch Umbiegen des Flanschseitenrands 5a.

### Patentansprüche

1. Rohrschelle, bestehend aus zwei mit miteinander verbindbaren Befestigungsflanschen (5) bezw. Gegenflanschen (4) an beiden Enden versehen, im wesentlichen halbringförmigen Schalen (1, 2), wobei wenigstens einer der Befestigungsflansche (5) einen in einer Seitenwand (5a) mündenden Einschnitt zur Aufnahme des Schaftes eines in den betreffenden Gegenflansch einzuschraubenden Befestigungsbolzens aufweist, dadurch gekennzeichnet, dass der Flansch (5) in der Nähe des offenen Endes des Einschnitts (8) eine nach aussen zu der dem Bolzenkopf (7) zugewendeten Seite der Ebene der Flanschfläche abweichende Erhöhung (8a, 5b) aufweist, welche beim Anliegen des Bolzenkopfes (7) an den Flansch (5) seitlich hinter den Bolzenkopf (7) greift, sodass die Schelle gegen Verschiebung gesichert ist.

2. Vorrichtung nach Anspruch 1, dadurch gekennzeichnet, dass die Erhöhung (8a, 5b) dadurch geformt ist, dass wenigstens einer der Längsränder des Einschnitts in einer von dem betreffenden Gegenflansch (4) abgekehrten Richtung abgewinkelt ist.

3. Vorrichtung nach Anspruch 1, dadurch gekennzeichnet, dass die Erhöhung dadurch geformt ist, dass die den Einschnitt (8) enthaltende Seitenwand (5a) der Befestigungsflansch (5) in einer von den Gegenflansch (4) abgekehrten Richtung abgewinkelt ist.

4. Vorrichtung nach Anspruch 1, dadurch gekennzeichnet dass der Befestigungsflansch (5) in der Nähe des offenen Endes des Einschnitts (8) eine oder mehrere von dem Gegenflansch (4) abgekehrten Durchsetzungen aufweist.

### Claims

1. Pipe-clip, comprising two semi-annular straps (1, 2) having mutually connectable fastening flanges (5) and counter flanges (4) respectively at both ends, at least one of the fastening flanges (5) having a slit which merges into a side edge (5a) and is adapted to accommodate the shank of a fastening bolt to be screwed into the respective counter flange, characterized in that said flange (5) has - adjacent the open end of the slit (8) - a raised portion (8a, 5b) projecting outwardly from the bolt head (7) facing surface of the flange, said raised portion being adapted to engage the bolt head (7), while the latter is bearing on the flange, so as to secure the clip against undue displacement.

2. Device according to claim 1, characterized in that said raised portion (8a, 5b) is formed by bending at least one of the longitudinal edges of said slit (8) in a direction turned away from the counter flange (4).

3. Device according to claim 1, characterized in that said raised portion (8a, 5b) is formed by bending the side edge (5a) of the flange (5), in which said slit (8) is provided, in a direction turned away from the counter flange (4).

4. A device according to claim 1, characterized in that the fastening flange (5) is provided, adjacent the open end of the slit (8), with one or more indentations extending in a direction turned away from the counter flange (4).

### Revendications

1. Collier pour tuyauteries, comprenant deux parties plates (1, 2) essentiellement semi-annulaires pourvues de brides (5) ou respectivement de contre-brides (4) aux deux extrémités, étant mutuellement reliables, au moins une des brides (5) de fixation étant porvue d'un évidement, terminant dans une parois latérale (5a), pour recevoir la tige d'un boulon de fixation à visser dans la contre-bride relative, caractérisé en ce que la bride (5) près de l'extrémité ouverte de l'évidement (8) à un relèvement (8a, 5b) dirigé à l'extérieur vers le côté du plan de la surface de la bride se trouvant à l'opposé de la tête (7) de boulon, ledit relèvement s'engageant latéralement derrière la tête (7) de boulon quand la tête (7) de boulon contacte la bride (5), de sorte que le collier est protégé contre le déplacement.

2. Dispositif selon la revendication 1,

**0 123 363**

caractérisé en ce que le relêvement (8a, 5b) a été formé ainsi qu'au moins un des bords longitudinaux de l'évidement (8) a été plié dans une direction s'étendant à l'écart de la contre-bride (4) relative.

3. Dispositif selon la revendication 1, caractérisé en ce que le relêvement (8a, 5b) a été formé en ce que la paroi (5a) latérale de la bride (5) de fixation comprenant l'évidement (8) a été pliée dans une direction s'étendant à l'écart de la contre-bride (4).

4. Dispositif selon la revendication 7, caractérisé en ce que la bride (5) de fixation est pourvue près de l'extrémité ouverte de l'évidement (8) d'une ou plusieurs poussées dans la direction opposée à la contre-bride (4).

FIG. 1

FIG. 2A    FIG. 2B

FIG. 2C